# EUROPEAN PATENT SPECIFICATION

(11) **EP 1 848 657 B1**
(45) Date of publication and mention of the grant of the patent: **13.02.2013**
(21) Application number: 05819270.9
(22) Date of filing: 16.12.2005
(51) Int. Cl.: B67D 7/78

(54) **TRANSFERABLE LIQUID DISPENSING STATION**
TRANSFERIERBARE FLÜSSIGKEITSABGABESTATION
POSTE DE DISTRIBUTION DE LIQUIDE TRANSFERABLE

(30) Priority: 20.12.2004 CZ 20041221
(43) Date of publication of application: 31.10.2007
(73) Proprietor: Zerdik, Miroslav, 709 00 Ostrava (CZ)
(72) Inventor: Zerdik, Miroslav, 709 00 Ostrava (CZ)
(74) Representative: Zak, Vitezslav
(86) International application number: PCT/CZ2005/000094
(87) International publication number: WO 2006/066515

(56) References cited:
- EP-A- 0 507 690
- WO-A-02/20393
- WO-A-98/01330
- DE-A1- 10 139 353
- US-A- 5 988 439
- US-A1- 2004 164 144
- US-B1- 6 240 963

## Description

### Technical Field

The invention relates to a transferable liquid dispensing station provided with a storage tank and control and service facilities, located in a common housing, the housing being constructed of a frame reinforced with a jacket.

### Background of the Invention

Standard stationary liquid dispensing stations, especially the ones for dispensing of fuels feature construction of service building and underground storage tanks, the construction of which is time consuming and expensive. Such stations also need arrangements for preventing fuel leakage and environment contamination. Also personnel, at least at the desk, are necessary for servicing customers. If a station has non-stop service hours, even more staff is necessary. It is a different situation when a temporary station is to be opened, as the case may be on a detour road, when a permanent station is out of operation and the next one is far away. In document WO 02/20 393, there is described a transportable dispensing station furnished with a delivery stand containing a delivery hose and a delivery nozzle, control unit and a servicing unit having means for handling a pay-card and data transfer block. The transportable station described in the paper does not deal with transportation problems and its installation on a site and associated problems to meet demands according to respective standards and regulations. Some mechanical problems, especially an improvement of the rigidity of the housing and location of individual equipment are solved by the embodiment of a dispenser station according to WO 03/ 00584. From DE 101 39 353 there is known a transferable liquid dispensing station provided with liquid storage means and control and service facilities located in a common housing, the housing being constructed of a reinforced frame with a jacket and a vertical wall dividing the common housing inside space into a liquid storage room and a room for the control and service facilities.

It is an object of the invention to increase variability of a liquid dispensing station by a new design of the housing internal room, design of storage tanks and by improved safety of operation of the station.

### Disclosure and Object of the Invention

The object of the invention is achieved by a transferable liquid dispensing station provided with liquid storage means and control and service facilities located in a common housing, the housing being constructed of a reinforced with longitudinal beams, cross-beams, an outer frame jacket and a vertical wall dividing the common housing inside space into a liquid storage room and a room for the control and service facilities the said housing being according to the invention subject matter foreseen with an additional inner jacket, the liquid storage room being situated within the inner jacket. Further in accordance with the present invention at least two built-in storage tanks are attached inside in the liquid storage room, the individual storage tanks being mutually separated by a leak-proof partition wall the height of which is at least a part of the total height of the housing inside space. Still further in accordance with the present invention the frame, at least within the liquid storage room, is provided by an inner jacket which is leak-proof connected with at least one of the partition walls. According to a preferred feature of the invention embodiment each storage tank is attached to the bottom part of the frame by means of a pair of diagonally arranged fixed holders and a pair of diagonally arranged feet, the feet being provided with means for a resilient seating of the storage tank. According to a preferred feature of the invention at least one storage tank is provided with inner perforated dividing walls. According to another preferred feature at least a part of the liquid storage room is provided with inner perforated dividing walls. According to another preferred embodiment the control and service facilities are provided with a unit of hydraulics, a filling unit and an unit of electronics, the units being provided with remote control elements and/or elements for manual handling, arranged at least at one of the vertical walls of the housing. The liquid storage room and/or the room for the control and service facilities may be provided with air-conditioning means and/or automatic fire extinguisher. The room for the control and service facilities may be provided with water treatment facilities and/or means for dispensing of small goods.

According to one aspect of the invention the design of the housing provides for high variability of liquids to be delivered, including water, fuels, gases and/or a combination thereof and a sale of small goods. The storage tanks enable transportation when being either full or empty. For some liquids, like water, when any leakage is of no danger to environment, the construction with a double jacket is sufficient and it not necessary to use a separate built-in tank. The station may be used both for all kinds of fluids, liquids and gases, one or more fluids may me delivered, even in small amounts. In places where wholesome water is a problem, there can be included means for treatment of the liquid. According to another aspect of the invention the liquid dispensing station provides for a fully self-service operation, where no permanent staff is necessary and offers a possibility to install such a station at a place of current need without excessive investment costs.

### Brief Description of the rawings

By way of examples the invention will be now described with reference to the accompanying drawing. Fig. 1 illustrates a front elevation view of the said station, Fig. 2 shows a cutaway front elevation view on the station with a separate storage tank, on Fig. 3 there is presented the station without a separate storage tank and Fig. 4 depicts a schematic block diagram of the control unit.

### Description of Preferred Embodiments

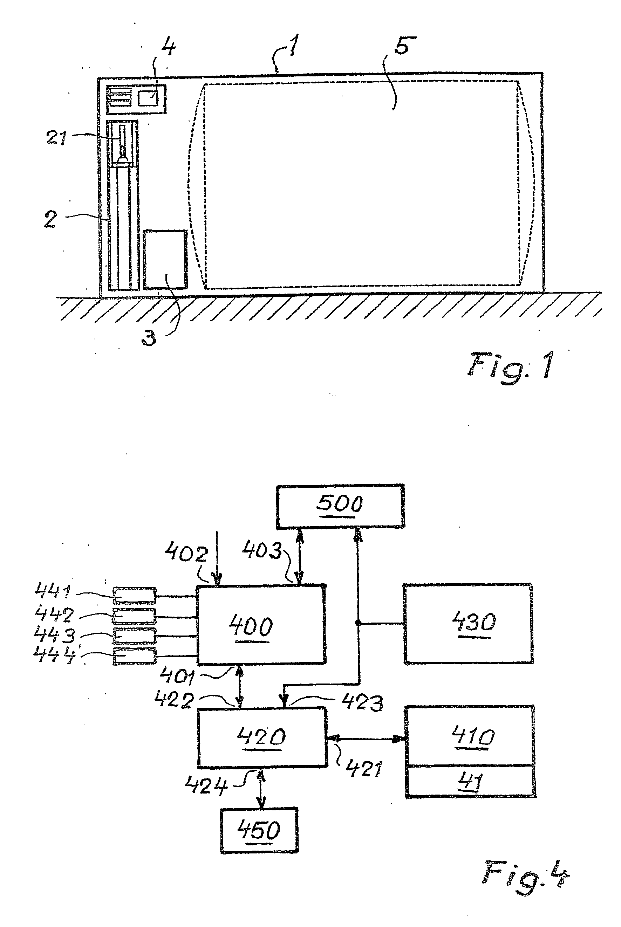

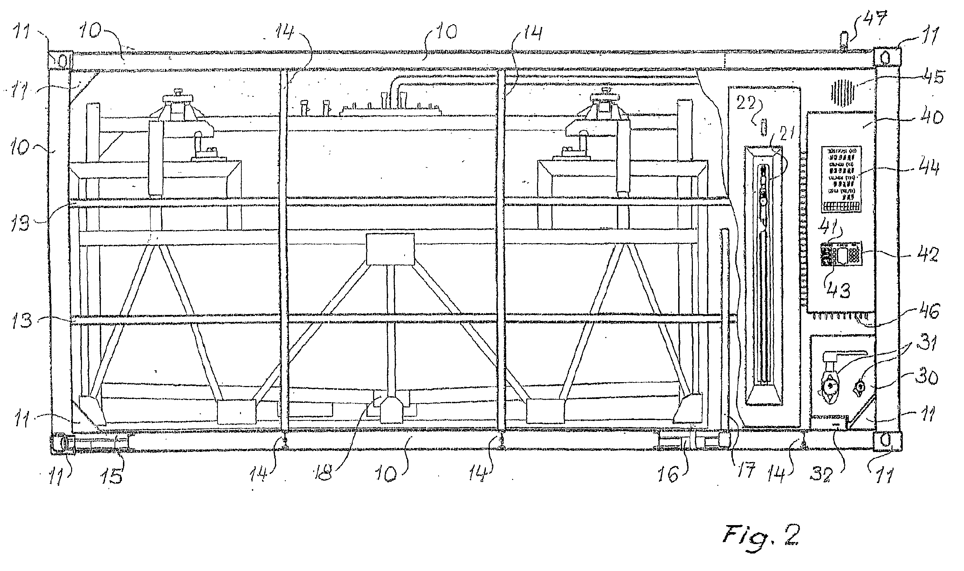

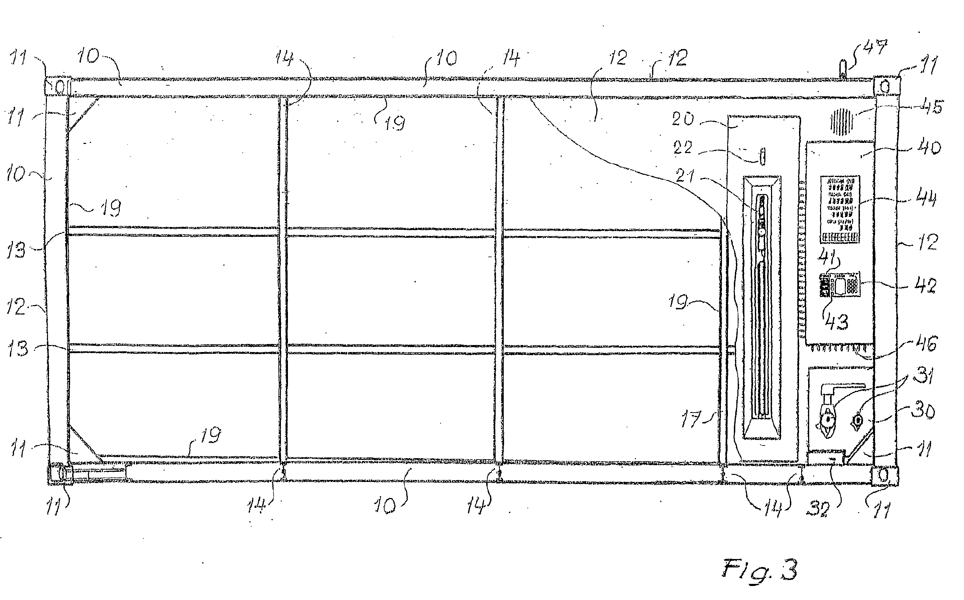

As presented in Fig. 1, the transferable liquid dispensing station consists of a single housing 1, inside which there are arranged a storage tank 5 and control and service facilities, comprising a unit 2 of hydraulics, an filling unit 3 and an unit 4 of electronics. Mechanical construction of the housing has to meet demands on transportation and location of the station at a site of immediate need. With respect to desired mechanical rigidity, the housing 1, as presented on Fig. 2 and Fig. 3, is designed as a frame covered with a jacket. The frame consists of beams 10, which are in corners fixed together by means of corner pieces 11. The outside surface of the housing 1 is made of an outside jacket 12 of smooth or profiled steel sheet, as the case may be.

All walls of the housing 1 are reinforced by longitudinal girders 13 and transversal girders 14. In the depicted embodiment there are used two longitudinal girders 13 and two transversal girders 14, but even more of them may be applied to achieve the desired rigidity. All the frame parts, the beams 10, the corner pieces 11, the longitudinal and the transversal girders 13,14 and the outside jacket 12 are mutually fixed together, preferably by welding to create a single rigid unit.

The station as shown on Fig. 1 has one storage tank 5. The room, where the storage tank 5 is located, i.e. the liquid storage room, and the remaining room within the housing 1, where control and service facilities are located are mutually separated by a partition wall 17, which is fixed to the frame. The partition wall 17 may or may not extend to full height of the housing inside room.

The storage tank 5, preferably of cubic shape to maximize the volume of stored liquid and of pressure chamber type, is attached to the frame bottom part in four points. Two of the points are mutually diagonally across the frame bottom part arranged fixed holders 15, while the two other points comprise feet 16, which are arranged at the ends of the second diagonal of the frame bottom part. The feet 16 are furnished with means for a resilient seat of the storage tank 5, e.g. with silentblocks, providing for minimal transfer of frame deformations, incl. torsion stress, upon the tank 5. The attachment of the tank 5, together with the above described construction of the housing 1 allows for a design with outside dimension according to the standard ISO 668 and in accordance to requirements of the standards ISO 1496 and ISO 1161, thus guaranteeing easy transportation of the station.

Inside the storage tank 5 there are located perforated dividing walls, breakwaters, minimizing impacts of the stored liquid on the walls during transportation periods. The tank bottom wall is inclined towards a sediment reservoir 18, which is located at the tank utmost bottom level. In the upper part of the housing 1 there are located pipes for filling and dispensation of a liquid and for ventilation of the tank inner space. A particular design of a tank 5 depends upon a type of a stored liquid. The tank 5 construction allows for transport both in empty and filled state.

Within the liquid storage room there may be located several tanks of the design as described above. Such an arrangement provides for dispensing liquid of various types at one place with one station. According to variety of dispensed liquids the whole inside area of the station is divided into individual sections, which are mutually mechanically separated by partition walls 17. Preferably such a partition wall 17 is constructed as a double wall piece with ventilated inner space. Individual tanks within one section are preferably also separated by partition walls 17.

The tank 5 outside jacket 12 comprises a removable roof to facilitate installation of the tank 5 within the frame and subsequently its inspection and maintenance. The said roof may cover completely the upper surface of the housing 1 or only a part of it, at least in the area above the tanks 5.

At one of the vertical walls 12, e.g. on the front wall as depicted on Fig. 2, there are arranged a panel 20 of the unit 2 of hydraulics, a panel 30 of the filing unit 3 and a panel 40 of the unit 4 of electronics. Each of the applied units 2,3,4 may be designed as a slide removable unit, thus facilitating maintenance, repairs and replacement of any unit if necessary. All the panels 20,30,40 containing control means of individual units 2,3,4 need not to be located on the same wall. The elements of the unit 2 of hydraulics and the filling unit 3 may be arranged either on the same or more walls of the housing. The design of each of the units 2,3,4 depends upon a particular liquid stored in and dispensed from the station.

The unit 2 of hydraulics contains all equipment for handling a liquid stored in the tank 5 and provides for a controlled and measured filling and dispensing of the liquid. Dispensing means allows for quick mode dispensing for high-capacity-tank trucks and standard mode dispensing for passenger cars as well. An example of the dispensing means is a dispensing nozzle 21 with one or more hoses. Flow indicator 22 shows circulation of a liquid when dispensed through the nozzle 21. By the station according to the invention there exists no servicing stand commonly used at standard petrol stations

The filling unit 3 serves for replenishment of the station. Filling fittings 31 provide for a safe and controlled flow of a liquid into the tanks 5. The filling unit 3 is equipped with a closing lid with a lock 32. All the filling places are furnished with lids having contacts sensors.

All the handling of the stored liquids is carried out by means of control elements of the unit 4 of electronics or by a remote control means. The control elements include a card unit 41, push-buttons 42 for setting a card identification code for cash-less payment for a tanked liquid and also emergency-call pushbuttons 43. Any payment is carried out by a credit card placed within an identified space in the front panel 40. All information necessary for handling a liquid dispense appear on a display 44. To improve a communication of a client with the station there is available a built-in voice unit 45 with a microphone and a loudspeaker. Ventilation openings 46 ensure safe operation of the module 4 of electronics in a case any fuel is tanked. GSM antenna, located at the housing 1 upper deck provide for transfer of all control and information data within the control system of a network of mobile liquid dispensing stations. The station may be also provided with monitoring equipment and a fire alarm.

The unit 4 of electronics is provided with a measurement unit 400, a card handling equipment 410, a control unit 420, a parameter watching block 430 and a data transmission block 500. As seen on Fig. 3, on outputs of the measurement unit 400 there are connected a unit price display 441, a total tanked quantity display 442, a final price display 443 and a card balance display 444.

The control unit 420, preferably equipped with a processor, is provided with four ports. On the first port 421 there is connected the card handling equipment 410, the second port 422 is connected to the measurement unit 400, the third port 423 is connected to the output of the parameter watching block 430 and the fourth port 424 is connected to a pump control block 450.

The measurement unit 400 has a port 401 for communication with the control unit, a tank content signal input 402 and a data transmission port 403. The data transmission port 403 and the parameter watching block 430 output are connected to the respective inputs of the data transmission block 500.

By the embodiment as presented on Fig. 3, the liquid storage room is separated from the control and service facilities room by a ventilated partition wall 17, which is fixed to the frame and extends along a full height of the housing inside room. Within a thus defined space the frame is provided with a compact inside jacket 19, which comprise also the adjacent part of the partition wall 17, which in this case is constructed as a double wall piece. By this embodiment the tank 5 occupies the whole liquid storage room and all manipulation tubes open into this room, thus there si no separate tank installed within the housing. Similarly to the built-in storage tank 5 at least a part of the room defined by the inside jacket 19 is provided with perforated longitudinal and/or transversal dividing walls.

The room for location of the control and service facilities is designed and furnished in the same manner as it is by the embodiment described above. Similarly to the design with built-in tanks 5 applying double partition walls 17 it is possible to divide the whole liquid storage room into sections for different liquids. Also here it is preferred to use perforated dividing walls in each of the sections.

The construction with the outside and inside jackets 12,19 is designed for liquids and operation conditions requiring less demands on manipulation with respect to safety and the environment.

For stations supplying flammable liquids, such as gasoline, petrol, oils etc., and the housing 1 is further furnished with an automatic extinguisher, which is installed in the vicinity of the filling unit 3 and the unit 2 of hydraulics and individual storage tanks as well. The extinguisher, e.g. an equipment of and aerosol type, is not shown on the drawings. Undesired leakage of liquids of this type in a case of a breakdown of the tank 5 or any equipment within the filling unit 3 or the unit 2 of hydraulics, is prevented by a leakage-proof design of the jackets 12,19 of the housing 1 frame together with the ventilated partition walls 17. Undesired appearance of the liquid during any stage of the station transport is monitored by special sensors, operating on a principle of photon loss on a boundary surface of media with different indices of refraction. Such sensing equipment, known as such, is not depicted on the drawings.

Power supply is galvanic separated from a power distribution network and has its own protection by grounding at a site. An accumulator serves as a time-limited stand-by source in a case of any power network failure. To increase a mobility of the station a single-phase supply is preferred. It is also possible to use solar cells or electric power generating units.

With respect to the type of liquids stored in the station and the climatic conditions of the area of installation it is recommended to furnish the liquid storage room and/or the room for control and service facilities with air-conditioning equipment to cool or heat the station inside space. E.g. it is necessary to heat electronics in cold areas.

To increase possibilities offered to end users of the station the room for control and service facilities may be preferably provided with equipment for a retail sale of goods like fuel additives, oil, brake liquid, etc.

Very special purpose of the station is dispensing of drinking water in areas, where water supply is at least a temporary problem. In such a case the station may be provided with equipment for water treatment.

The station operates as follows :

To be served from a station according to the invention a customer needs a credit card, such as "an electronic purse", i.e. a card with a contactless data sensing. The card is inserted into the card unit 41, which is a part of the card handling equipment 410, where an authorisation of the card is performed. In a case an improper card or a card with a zero credit is inserted, any liquid collection is blocked by a signal from the fourth port 424 of the control unit 420. To the contrary, after acceptance of the card and its non-zero credit, the dispensing means shall become available and the customer may collect any amount of the liquid up to the volume corresponding to existing credit on the card. Proportionally to the tanked volume of the liquid the card credit shall be reduced down to a zero value, when any further tanking shall be automatically stopped. The price for the tanked liquid volume shall be subtracted from card credit sum and the resulting value entered into the card by means of the card handling equipment 410. Start and stop of the tanking process by the customer is carried out by a standard procedure by means of the dispensing nozzle 21, the construction of which is known as such.

The signal for blocking a pump may be sent to the pump control block 450 also from one of the control unit 420 outputs.

The parameter watching block 430 monitors such parameters as volume of liquid inside the tank 5, its temperature etc. As the block also monitors any manipulation with the station, any stealing or unauthorised transfer of the station to another site should be prevented. All acquired data are continuously or in pre-set time-intervals automatically transferred to the headquarters, which collects data from all liquid dispensing stations.

By means of the data transmission block 500 it is possible to enter actual prices of the particular liquid into the module 4 of electronics, namely into the measurement unit 400. Application of contactless cards and sensors capable not only to read cards but also make records into the cards, eliminates authorisation of cards by means of a modem connected to a permanent telephone line. All on-line control and off-line information transmissions are performed wireless, by means of GSM, UMTS, FVA or other networks. Such systems ensure fast installation of the station also on sites where standard telephone network is not available.

### Industrial applications

The transferable liquid dispensing station according to the invention is designed for transportation and dispensing of liquids and gasses, with a possibility of additional retail sell of goods. The stations of the kind may be combined to create large units.

## Claims

1. Transferable liquid dispensing station (1) provided with liquid storage means and control and service facilities located in a common housing, the housing being constructed of a frame reinforcing with longitudinal beams, cross-beams, an outer jacket (12) and a vertical wall dividing the common housing inside space into a liquid storage room and a room for the control and service facilities, **characterized in that** the housing is foreseen with an additional inner jacket (19) and the liquid storage room is situated within the inner jacket (19).

2. Transferable liquid dispensing station according to claim 1 or 2, **characterized in that** inside in the liquid storage room there are attached at least two built-in storage tanks (5), the individual storage tanks being mutually separated by a leakproof partition wall (17) the height of which is at least a part of the total height of the housing inside space.

3. Transferable liquid dispensing station according to claim 3, **characterized in that** each storage tank (5) is attached to the bottom part of the frame (10) by means of a pair of diagonally arranged fixed holders (15) and a pair of diagonally arranged feet (16), the feet being provided with means for a resilient seating of the storage tank (5).

4. Transferable liquid dispensing station according to claim 3 or 4, **characterized in that** at least one storage tank (5) is provided with at least one inner perforated dividing wall.

5. Transferable liquid dispensing station according to claim 1 or 2, **characterized in that** the liquid storage room is provided with at least one inner perforated dividing wall.

6. Transferable liquid dispensing station according to any of the foregoing claims, **characterized in that** the control and service facilities are provided with a unit (2) of hydraulics, a filling unit (3) and an unit (4) of electronics, the units being provided with elements for manual handling, arranged at least at one of the vertical walls (12) of the housing (1) and/or with remote control elements.

7. Transferable liquid dispensing station according to any of the foregoing claims, **characterized in that** the liquid storage room and/or the room for the control and service facilities is provided with means for air-conditioning.

8. Transferable liquid dispensing station according to any of the foregoing claims, **characterized in that** the room for the control and service facilities is provided with water treatment facilities and/or means for dispensing of small goods.

## Patentansprüche

1. Transferierbare Flüssigkeitsabgabestation (1) versehen mit Vorrichtungen zur Lagerung der Flüssigkeit, Steuer- und Bedieneinrichtungen, die in einem gemeinsamen Kasten angeordnet sind, wobei der Kasten durch einen mit Längsträgern versteiften Rahmen, Querträger und den Außenmantel (12) gebildet wird und durch eine senkrechte Wand in einen Raum für die Flüssigkeit und einen Raum für die Steuer- und Bedieneinrichtungen unterteilt ist, **dadurch gekennzeichnet, dass** der Kasten darüber hinaus mit einem inneren Mantel (19) versehen ist, wobei der Raum für die Flüssigkeit sich innerhalb des inneren Mantels (19) befindet.

2. Transferierbare Flüssigkeitsabgabestation nach Anspruch 1, **dadurch gekennzeichnet, dass** im Raum für die Flüssigkeit wenigstens zwei eingebaute Behälter (5) befestigt ist, wobei die Behälter (5) durch eine undurchlässige Zwischenwand (17) voneinander getrennt sind, die wenigstens einen Teil der Höhe des Innenraums des Kastens einnimmt.

3. Transferierbare Flüssigkeitsabgabestation nach Anspruch 2, **dadurch gekennzeichnet, dass** der Behälter (5) am unteren Teil des Rahmens (10) durch zwei diagonal zueinander angeordnete Halterungen (15) und ebenfalls diagonal angeordnete Füße (16) befestigt ist, wobei die Füße (16) mit Vorrichtungen zur elastischen Lagerung des Behälters (5) versehen sind.

4. Transferierbare Flüssigkeitsabgabestation nach Anspruch 2 oder 3, **dadurch gekennzeichnet, dass** wenigstens ein Behälter (5) im Innern mit gelochten Trennwänden versehen ist.

5. Transferierbare Flüssigkeitsabgabestation nach Anspruch 1, **dadurch gekennzeichnet, dass** der Raum für die Flüssigkeit im Innern mit wenigstens einer gelochten Trennwand versehen ist.

6. Transferierbare Flüssigkeitsabgabestation nach einem der vorangehenden Ansprüche, **dadurch gekennzeichnet, dass** die Bedien- und Steuereinrichtungen ein Hydraulikblock (2), ein Befüllungsblock (3) und ein Elektronikblock (4) sind, welche mit Elementen zur manuellen Bedienung, die sich an wenigstens einer der senkrechten Wände (12) des Kastens (1) befinden, und/oder Elementen für eine Fernbedienung versehen sind.

7. Transferierbare Flüssigkeitsabgabestation nach einem der vorangehenden Ansprüche, **dadurch gekennzeichnet, dass** der Raum für die Flüssigkeit und/oder der Raum für die Bedien- und Steuereinrichtungen mit einer Klimatisierung versehen ist.

8. Transferierbare Flüssigkeitsabgabestation nach einem der vorangehenden Ansprüche, **dadurch gekennzeichnet, dass** der Raum für die Bedien- und Steuereinrichtungen mit einer Vorrichtung zur Wasseraufbereitung und/oder einer Vorrichtung zur Ausgabe kleinerer Waren versehen ist.

## Revendications

1. Poste (1) de distribution de liquide transferable pourvu des moyens de stockage du fluide, des dispositifs de commande et de service situés dans l'armoire commune l'armoire étant constituée d'un cadre renforcé par les entretoises et d'une enveloppe (12) et divisée par une paroi verticale en espace recevant le fluide et espace recevant les dispositifs de commande et service, caractérisée en ce l'armoire est en plus munie d'une enveloppe intérieure (19) l'espace recevant le fluide étant situé à l'intérieur de l'enveloppe intérieure (19).

2. Poste selon la revendication 1, **caractérisée en ce que** dans l'espace recevant le fluide sont fixés au moins deux réservoirs encastrés (5) les réservoirs (5) étant divisés par une paroi intermédiaire étanche (17) remplissant au moins une partie de la hauteur de l'espace intérieur de l'armoire.

3. Poste selon la revendication 2, **caractérisée en ce que** le réservoir (5) est fixé à la partie inférieure du cadre (10) à l'aide des supports disposés de manière diagonale les uns par rapport aux autres (15) et des pattes disposées également de manière diagonale (16), les pattes (16) étant pourvues des moyens pour un logement flexible du réservoir (5).

4. Poste selon l'une des revendications 2 ou 3, **caractérisée en ce qu'**au moins un réservoir (5) est pourvu des cloisons intérieures perforées.

5. Poste selon la revendication 1, **caractérisée en ce que** l'espace recavnt le fluide est muni d'au moins une cloison intérieure perforée.

6. Poste selon l'une des revendications précédentes, **caractérisée en ce que** les dispositifs de commande et de service sont constitués d'un bloc d'hydraulique (2) bloc de remplissage (3) et bloc d'électronique (4), pourvus des moyens de la commande manuelle disposés sur au moins une paroi verticale (12) de l'armoire (1) et/ou des éléments de la télécommande.

7. Station de pompage mobile selon l'une des revendications précédentes, **caractérisée en ce que** l'espace recevant le fluide et/ou l'espace recevant les dispositifs de commande et de service est pourvu d'un élément de climatisation.

8. Poste selon l'une des revendications précédentes, **caractérisée en ce que** l'espace recevant les dispositifs de commande et de service est muni d'un dispositif de traitement de l'eau et/ou dispositif de distribution des petits articles.
